**Europäisches Patentamt**

**European Patent Office**

**Office européen des brevets**

(19)

(11) Veröffentlichungsnummer: **0 135 015**
**B1**

(12)    **EUROPÄISCHE PATENTSCHRIFT**

(45) Veröffentlichungstag der Patentschrift:
**12.10.88**

(21) Anmeldenummer: **84108301.7**

(22) Anmeldetag: **14.07.84**

(51) Int. Cl.⁴: **H 02 P 7/00**

(54)    **Steuer- und Bedienvorrichtung für ein elektrisches Gerät.**

(30) Priorität: **19.08.83 DE 3329971**

(43) Veröffentlichungstag der Anmeldung:
**27.03.85 Patentblatt 85/13**

(45) Bekanntmachung des Hinweises auf die Patenterteilung:
**12.10.88 Patentblatt 88/41**

(84) Benannte Vertragsstaaten:
**DE FR NL**

(56) Entgegenhaltungen:
**EP-A-0 086 114**
**FR-A-2 463 993**
**GB-A-2 123 174**
**US-A-4 317 176**

(73) Patentinhaber: **ROBERT BOSCH GMBH, Postfach
50, D-7000 Stuttgart 1 (DE)**

(72) Erfinder: **Bauer, Hans- Peter, Dr.- Phys.,
Telemannstrasse 4, D-7255 Rutesheim (DE)**

**EP 0 135 015 B1**

## Beschreibung

### Stand der Technik

Die Erfindung geht aus von einer elektrischen Handwerkzeugmaschine nach der Gattung des Hauptanspruchs. Aus der EP-A-86 114 ist bekannt, daß ein Elektrowerkzeug, insbesondere eine elektrische Bohrmaschine, zur Drehzahlregelung einen Mikrocomputer hat, dem über ein Tastenfeld Parameter wie Materialart und Bohrerdurchmesser eingegeben werden. Der Mikrocomputer bestimmt daraus einen Drehzahlwert für die Regel schaltung, die die Drehzahl des Motors einstellt. Zur Kontrolle wird die Motordrehzahl auf einem Display zur Anzeige gebracht. Eine solchermaßen aufgebaute elektronische Bohrmaschine ist jedoch teuer, da neben einer zentralen Steuereinheit noch Arbeits- und Festwertspeicher benötigt werden, die einerseits das Programm enthalten und andererseits zur Bearbeitung der Rechenwerte dienen. Das gleiche gilt z. B. für elektrische Geräte, Waschmaschinen und ähnliches. Für die Erstellung des Programmes sind weitere Aufwendungen zu tätigen. Die Elektronik solchermaßen ausgestatteter Geräte ist äußerst kostspielig und aufgrund der Eigenschaften der verwendeten Bauelemente auch leicht störanfällig und empfindlich gegen elektrische Einstreuungen z. B. von Seiten des Motors.

### Vorteile der Erfindung

Das erfindungsgemäße elektrische Gerät mit den kennzeichnenden Merkmalen des Hauptanspruchs hat demgegenüber den Vorteil, daß es einfach aufzubauen ist und nur wenige elektrische Bauteile benötigt. Dadurch ist das Gerät kostengünstig aufzubauen. Die Schaltungsanordnung benötigt insbesondere kein zentrales Steuerwerk und kann voll statisch aufgebaut werden, so daß sie in hohem Maße unempfindlich gegen elektrische Einstreuungen ist. Änderungen, beispielsweise bezüglich der maximalen Drehzahl bei Bohr- oder Küchenmaschinen, bei bestimmten vorgegebenen Eingabeparametern sind leicht möglich, da nur ein einziges Bauelement auszutauschen ist. Als weiterer Vorteil ist anzusehen, daß die gesamte Schaltungsanordnung für mehrere Handwerkzeuge oder unterschiedliche Maschinentypen zu verwenden ist, wobei das Einstellen individueller Daten lediglich durch das Einsetzen eines bestimmten Speicherbausteines erfolgt, in dem die wesentlichen Werte enthalten sind.

Durch die in den abhängigen Ansprüchen aufgeführten Maßnahmen sind vorteilhafte Weiterbildungen und Verbesserungen der im Hauptanspruch angegebenen elektrischen Geräte möglich. Vorteilhaft ist es, die Ausgangssignale der Eingabevorrichtung als Adressen einem Speicher, insbesondere einem ROM oder PROM zuzuführen und durch einen Teil der Ausgangssignale des Speichers die maximale oder ideale Drehzahl des Motors der Geräte festzulegen. Ein anderer Teil des Ausgangssignals dient vorteilhafter Weise zur Anzeige der eingestellten Drehzahl oder anderer Steuergrößen. Hierdurch ergibt sich ein besonders einfacher Schaltungsaufbau. Vorteilhaft ist es weiterhin, mittels weiterer Adressleitungen Informationen über den Betriebszusand der Geräte zu berücksichtigen. Aufwendige mechanische Vorrichtungen zur Vermeidung von Bedienungsfehlern, wie z. B. eine Schlagbohrsperre beim Linkslauf von Bohrmaschinen oder eine Schleudersperre bei Waschvorgängen, können dann entfallen. Eine weitere Möglichkeit ist es, das Ausgangssignal des Speichers zur Begrenzung der Drehzahl des Motors der Geräte zu benutzen. Durch diese Maßnahme bleibt es den Betreiber z. B. des Handwerkzeuges unbenommen, niedrigere Geschwindigkeiten einzustellen Geschwindigkeiten, die jedoch das Werkzeug beschädigen können, werden verhindert. Vorteilhaft ist es auch, mittels des Ausgangssignals des Speichers direkt die Drehzahl des Motors zu bestimmen, indem das entsprechende Datenwort den Sollwert für einen Drehzahlregler vorgibt. Günstig ist es, wenn das Ausgangssignal des Speichers angezeigt wird. Dabei ist es besonders vorteilhaft, hierfür einen Teil der Ausgänge direkt zu verwenden, so daß die sonst erforderlichen Anzeigedekodierschalungen entfallen. Als weiterer Vorteil der Anordnung ist zu betrachten, daß neben der maximal zulässigen Drehzahl oder der vorgegebenen Drehzahl des Gerätes andere relevante Größen leicht anzeigbar sind.

Für die Eingabe der Signale an den Adresseingang des Speichers eignen sich insbesondere kodierte Drucktasten oder ein entsprechend kodierter Drehknopf. Diese Anordnungen sind mechanisch sehr stabil und ermöglichen auf einfache Art und Weise die Vorgabe der Adressen. Durch diese Maßnahme läßt sich die Elektronik robust und wenig störanfallig aufbauen. Eine besonders einfache Bedienung ist durch eine Zweitastensteuerung gegeben. Hierbei wird bei jedem Betätigen einer Taste eine relevante Größe, beispielsweise die Drehzahl oder der vorgegebene Bohrerdurchmesser, weitergeschaltet. Eine technische Realisierung ist hierbei insbesondere durch ein Schieberegister oder einen Zähler möglich.

### Zeichnung

Ausführungsbeispiele der Erfindung sind am Beispiel eines Handwerkzeuges in der Zeichnung dargestellt und in der nachfolgenden Beschreibung näher erläutert. Es zeigen Figur 1 eine Schaltungsanordnung nach der Erfindung für die Verwendung in einer elektrischen Stichsäge, Figur 2 eine Schaltungsanordnung nach der Erfindung für die Verwendung in einer Bohrmaschine, die Figuren 3 bis 5 Ausführungsbeispiele für die Eingabe und Anzeige von Daten für eine Bohrmaschine und Figur 6 eine weitere Möglichkeit der Eingabe und Anzeige für eine Stichsäge.

**Beschreibung der Ausführungsbeispiele**

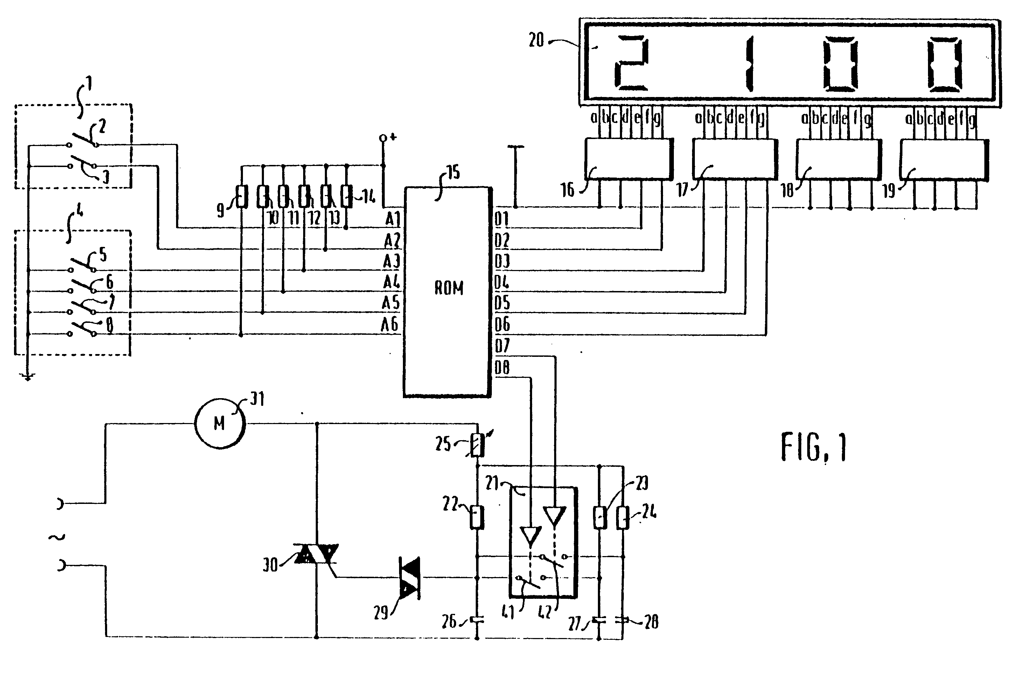

Figur 1 zeigt eine Eingabevorrichtung 1 mit zwei Schaltern 2 und 3, die beispielsweise zur Eingabe der Materialart bei einer elektrischen Stichsäge dient. Durch die Schalter 2 und 3 sind im Binärcode maximal vier Materialien vorwählbar. Eine zweite Eingabevorrichtung 4 dient bei der Stichsäge dazu, bestimmte Materialstärken vorzugeben. Die Eingabevorrichtung 4 weist vier Schalter 5 bis 8 auf, mittels deren im Binärcode 16 verschiedene Materialdicken zuordenbar sind. Der eine Anschluß der Schalter 2, 3 und der Schalter 5 bis 8 ist an die gemeinsame Masseleitung angeschlossen. Der andere Anschluß der Schalter steht mit jeweils einem Adresseingang des als ROM ausgebildeten Speichers 15 in Verbindung. So ist beispielsweise der Anschluß des Schalters 2 an den Adresseingang A1, der anschließende Schalter 3 an den Adresseingang A2 und der Anschluß des Schalters 8 an den Adresseingang A6 geschaltet. Widerstände 9 bis 14 führen von jedem Adresseingang A1 bis A6 zur positiven Versorgungsspannungsleitung.

Die Datenausgänge D1 und D2 des ROMs 15 führen zu einem Dekoder und Treiber 16. Die Datenausgänge D3 bis D6 führen zu einem Dekoder und Treiber 17, während die Datenausgänge D7 und D8 zu einem Analogschalter 21 geführt sind. Zwei weitere Eingänge des Dekoders und Treibers 16 sind gegen Masse geschaltet. Ebenfalls sind alle Eingänge des Dekoders und Treibers 18 und 19 mit der Masseleitung verbunden. Der Analogschalter 21 weist zwei Schalter 41 und 42 auf, wobei der Schalter 41 vom Ausgang D8 und der Schalter 42 vom Ausgang DT des ROMs 15 geschaltet sind. An das Wechselstromnetz ist ein Motor 31 angeschlossen, dessen weiterer Anschluß zu einem Triac 30 führt. Der weitere Pol des Triacs 30 führt zu dem anderen Anschluß der Wechselspannungsleitung. Der Motor ist des weiteren über ein Potentiometer 25 mit einem Zeitglied aus dem Widerstand 22 in Serie mit dem Kondensator 26 verbunden, welches seinerseits mit dem weiteren Pol der Wechselspannungsleitung verbunden ist. Zwischen Widerstand 22 und Kondensator 26 ist eine Triggerdiode 29 angeschlossen, deren weiterer Anschluß mit dem Triggereingang des Triacs 30 verbunden ist. Parallel zum RC-Glied aus dem Widerstand 22 und dem Kondensator 26 sind RC-Glieder mit den Widerständen 23 und 24 in Serie mit dem Kondensatoren 27 und 28 geschaltet. Dabei kann der Widerstand 23 sowie die Kapazität 27 durch den Schalter 41 dem Widerstand 22 bzw. der Kapazität 26 parallel geschaltet werden. Ebenso ist dies mit dem Widerstand 24 sowie der Kapazität 28 durch den Schalter 42 möglich.

Die Schaltungsanordnung weist eine vierstellige Digitalanzeige 20 auf, die zur Anzeige der Sollhubzahl der Stichsäge dient. Da die Hubzahl nur in hunderter Schritten anzuzeigen ist, sind die Dekoder und Treiber 18 und 19 fest programmiert und zeigen immer eine O. Der Dekoder und Treiber 16 ist so geschaltet, daß die maximale Hubzahl gerade anzeigbar ist.

Ist nunmehr mittels des Eingabeschalters 1 die zu sägende Materialart und mittels des Eingabeschalters 4 deren Dicke vorgegeben, so liegt am Eingang des ROMs 15 auf der Adressleitung eine binäre Information an, die einen bestimmten Speicherplatz im ROM aufruft. An den Ausgängen D1 bis D8 des ROMs 15 liegt nunmehr eine binäre Information an, die einerseits die maximale Drehzahl des Motors auf einen vorgegebenen Wert begrenzt und andererseits die optimale Hubzahl auf der Anzeige 20 darstellt. Während die Ausgänge D1 bis D6 zur Anzeige der optimalen Hubzahl dienen, wird durch den Ausgang D7 und D8 die maximale Drehzahl begrenzt. Durch das Parallelschalten der RC-Glieder aus den Widerständen 23 bzw. 24 und den Kondensatoren 27 bzw. 28 einzeln oder zusammen sind insgesamt vier maximale Geschwindigkeiten vorgebbar. Dies geschieht dadurch, daß der Bereich des mit dem Potentiometer 25 einstellbaren zeitlichen Spannungsverlaufes an der Triggerdiode 29 durch die zusätzlichen Widerstände und Kondensatoren verändert wird. Mittels des Potentiometers 25 ist die Drehzahl des Motors 31 im vorgegebenen Rahmen einstellbar, wobei aufgrund der speziellen Beschaltung stets der gesamte Potentiometerhub für die Einstellung im zulässigen Drehzahlbereich zur Verfügung steht.

Die Zuordnung von Drehzahlwert und Steuersignal für die Begrenzung erfolgt am zweckmäßigsten durch ROMs oder PROMs. Der Einsatz maskenprogrammierte ROMs bietet sich insbesondere bei großen Stückzahlen an. PROMs besitzen dagegen den Vorteil, daß sie beim Anwender programmiert werden können und sich leicht Änderungen vornehmen lassen. Je nach Maschinenart ist es ausreichend, ein geeignetes ROM in die Maschine einzusetzen. Dadurch ist es möglich, diese Schaltungsanordnung für eine Vielzahl von Anwendungsfällen zu verwenden.

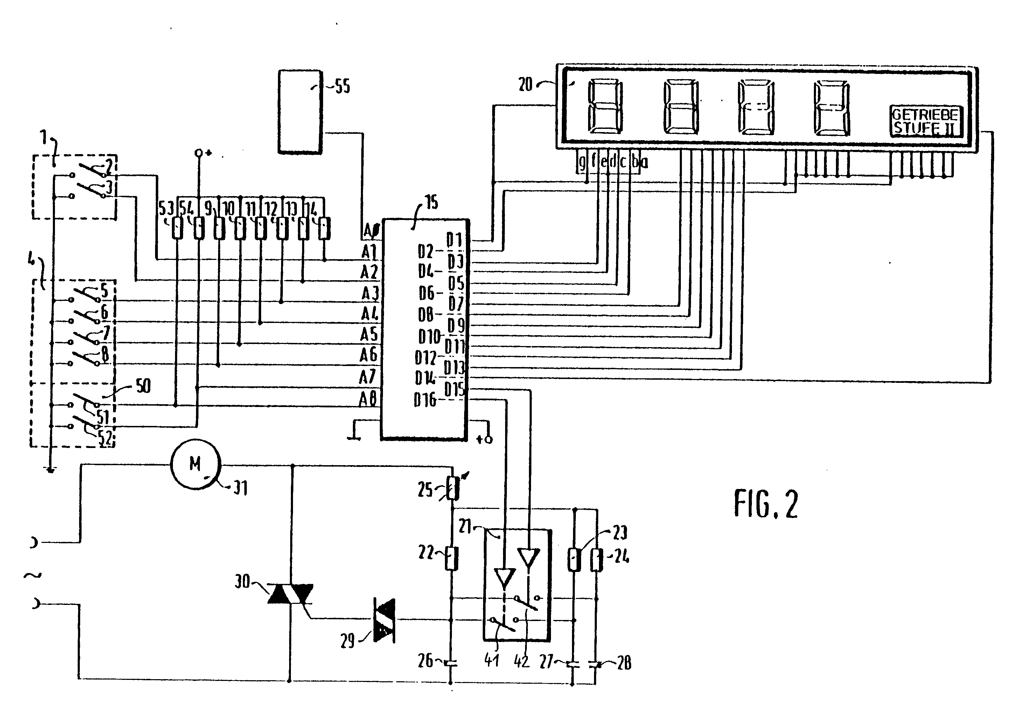

Figur 2 zeigt ein weiteres Ausführungsbeispiel für eine elektrische Bohrmaschine. Beim Einsatz von Bohrmaschinen ist zu beachten, daß es einen vom zu bearbeitenden Material und dem jeweiligen Bohrerdurchmesser abhängigen optimalen Drehzahlbereich gibt. Um saubere Bohrungen zu erhalten und Beschädigungen am Bohrer zu vermeiden, darf man eine werkstoffabhängige Schnittgeschwindigkeit und somit eine zusätzlich über den Bohrerdurchmesser bestimmte Höchstdrehzahl nicht überschreiten.

Die Schaltungsanordnung nach Figur 2 ist ähnlich der Schaltungsanordnung nach Figur 1 aufgebaut. Dementsprechend sind wiederum zwei Eingabevorrichtung 1 und 4 vorgesehen, wobei die Eingabevorrichtung 1 für die zu bearbeitende Materialart und die Eingabevorrichtung 4 für die Vorgabe des Bohrerdurchmessers dient. Daneben ist eine Eingabevorrichtung 50 vorhanden, über welche der Betriebszustand der Bohrmaschine berücksichtigt ist. Der Schalter 51 dient beispielsweise zur Erfassung der eingestellten Getriebestufe, während Schalter 52 die Drehrichtung (Rechtslauf, Linkslauf) der Maschine berücksichtigt. Die Ausgänge der drei Vorrichtungen 1, 4 und 50 bilden wiederum die Eingangssignale für die Adresseingänge A1 bis A8 des Speicherbausteines 15. Die Widerstände 9 bis 14 sowie 53 und 54 sind wiederum Pull-up-Widerstände, die an die Adresseingänge des Speichers 15 geschaltet sind.

Im Gegensatz zum Ausführungsbeispiel nach Figur 1 sind die Datenausgänge D1 bis D14 des Speichers 15 direkt an die LCD-Anzeige 20 angeschlossen. Den Eingabeparametern wird hierbei im ROM 15 nicht wie bei Figur 1 eine kodierte Zahl, sondern unmittelbar die zu deren Ziffern-Darstellung erforderlichen Informationen zur Ansteuerung der einzelnen Segmente zugeordnet. Hierbei ist zu berücksichtigen, daß LCD-Anzeigen mit einer Wechselspannung angesteuert werden müssen, wobei, im Takte des Signales für die gemeinsame Rückelektrode, an allen Segmenten jeweils abwechselnd die Aussteuerinformation und das dazu inverse Signal benötigt wird. Aus diesem Grund enthalten je zwei benachbarte Adressen im Speicher 15 die Daten für einen bestimmten Anzeigeinhalt und das dazu gehörige Komplement. Damit der resultierende Gleichspannungsanteil an der Anzeige annähernd 0V ist, was eine hohe Lebensdauer des Anzeigebausteins sicherstellt, wird die Spannung für die Rückelektrode der Anzeigevorrichtung 20 ebenfalls über einen Ausgang D1 des Speichers 15 erzeugt, welcher abhängig vom Adresseingang A0 den Wert logisch 0 oder 1 annimmt. Der Adresseingang A0 wird dazu von einem Oszillator 55 angesteuert, der die für LCD-Anzeigen typische Arbeitsfrequenz zwischen 30 und 300 Hz abgeben kann. Damit wird der Adresseingang A0 beständig zwischen logisch 0 und 1 umgeschaltet. Dadurch entsteht am Ausgang D1 des PROMs 15 ein Wechselsignal derselben Frequenz und die Ausgänge D3 bis D14 liefern im selben Takt abwechselnd die der Adresse A1 bis A8 zugeordnete Information oder deren Komplement. Da die Einer- und Zehnerstellen im Ausführungsbeispiel nur durch 0 ausgewiesen sind, sind alle anzuzeigenden Segmente zusammengefaßt und mit dem Ausgang D2 verbunden, welcher das inverse Signal zu D1 führt. Die nie aktiven Segmente sind mit dem Potential der Rückelektrode verbunden. Da bei der höchstwertigen Stelle nur die Ziffern 1, 2 und 3 verstellbar sein müssen, können ein Teil der Segmente gemeinsam betrieben werden. Die Ausgänge D15 und D16 bleiben für beiden Werte von A0 gleich. Über den Ausgang D14 wird dem Benutzer der Bohrmaschine mittels eines zusätzlichen Symbols auf der Anzeige empfohlen, welche Getriebestufe er benutzen sollte.

Neben den gezeigten Ausführungsbeispielen ist es ebenfalls möglich, das ausgegebene Datensignal zu einer feinabgestuften Einstellung der Drehzahl zu verwenden. Hierbei geben beispielsweise die Ausgangssignale D1 bis D8 in Figur 1 die Drehzahl detailliert vor. Diese Bitfolge dient, gegebenenfalls nach einer Digital-Analog-Wandlung, als Sollwert für einen Drehzahlregler. Die Dekoder und Treiber können hierbei in geeigneter Form an die Ausgänge D1 bis D8 angeschlossen werden. Weist die Handwerkzeugmaschine für die Drehzahlregelung einen Tachogenerator auf, so ist eine weitere Möglichkeit dadurch gegeben, daß die Anzeigevorrichtung 20 mit den dazugehörigen Dekodern und Treibern 16 bis 19 umschaltbar ausgeführt ist. Im Stillstand der Maschine wird der optimale Wert auf der Anzeige 20 dargestellt, während bei sich drehendem Motor die augenblickliche Drehzahl angezeigt ist.

Die Verwendung der Schaltungsanordnung ist bei beliebigen elektrischen Handwerkzeugmaschinen einsetzbar. So ist es beispielsweise bei der Verwendung der Schaltungsanordnung in Verbindung mit Sägen möglich, neben der Materialart das verwendete Sägeblatt oder die Schnittiefe anzugeben.

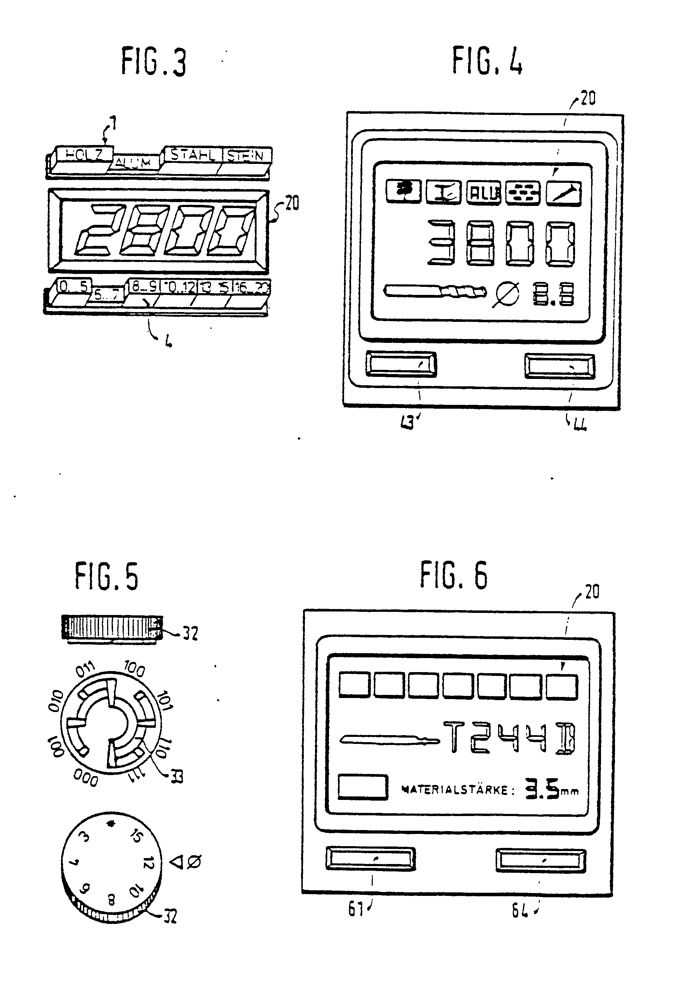

Figur 3 zeigt ein Ausführungsbeispiel der Anordnungen der Eingabevorrichtungen 1 und 4 der Figur 1 sowie der Anzeigevorrichtung 20. Die Eingabevorrichtung 1 weist vier Tasten auf, deren Schalter 2 und 3 entsprechend kodiert sind. Mit diesen Tasten sind beispielsweise im Falle einer Bohrmaschine vier verschiedene Materialarten vorgehbar. An die Eingabevorrichtung 1 schließt sich die Anzeigeeinheit 20 an, an der die gewünschte Solldrehzahl oder die aktuelle Drehzahl anzeigbar ist. Die Eingabevorrichtung 4 erlaubt mittels sechs Drucktasten die Auswahl einer Gruppe von Bohrerdurchmessern. Da hier nur sechs Drucktasten vorgesehen sind, wäre es ausreichend, wenn jede der sechs Drucktasten drei entsprechend kodierte Schalter aufweisen würde.

Statt eine Vielzahl von Tasten bei mehreren Werten und Größen zu verwenden, ist es möglich, diese durch eine elektronische Steuerung mit je einer Taste für Materialart und Bohrerdurchmesser zu ersetzen. Die elektronische Steuerung ist dabei im einfachsten Fall als Zähler ausgebildet, der bei jeder Betätigung der Taste um einen Wert weitergeschaltet wird. Damit ist es möglich den Speicherbaustein direkt anzusteuern. Hierdurch wird eine erhebliche Anzahl mechanischer Elemente eingespart. Figur 4 zeigt eine derartige Anordnung mit der Anzeigevorrichtung 20 und den Eingabetasten 43 und 44. Beim Betätigen der Taste 43 wird zyklisch von der gerade eingestellten Materialart auf die jeweils nächste umgeschaltet, wobei gleichzeitig die entsprechende Anzeige über Symbole erfolgt. Diese Symbole sind in der Anzeige 20 oben dargestellt. Ein Umschalten auf den jeweils nächsten Wert kann dabei auch fortlaufend bei Festhalten der Taste in einem durch die Elektronik vorgegebenen Takt erfolgen. Neben der Auswahl der Materialien kann ebenfalls die Funktion "Schrauben" ausgewählt werden, bei welcher die Maschine mit besonders niedrigerer maximaler Drehzahl läuft.

Die Figur 5 zeigt eine Anordnung, bei der der Bohrerdurchmesser bzw. die Materialdicke mittels eines Rändelrades einstellbar ist. Ein Rändelrad 32 weist auf seiner Unterseite Kodierungen 33 auf, wobei die Schalter in drei Ebenen radial angeordnet sind. Eine solche Ausgestaltung der Eingabevorrichtung ist besonders preisgünstig herstellbar und ermöglicht ebenfalls eine sichere Adressvorgabe für den Speicher 15.

Figur 6 zeigt ein Bedienteil für Stichsägen, wie es für Bohrmaschinen bereits in Figur 4 dargestellt ist. In der Anzeigevorrichtung 20 sind wiederum die möglichen Materialarten dargestellt sowie eine Empfehlung, welches Stichsägeblatt vorteilhafterweise verwendbar ist. Die Materialart wird mittels der Taste 61 eingestellt, während die Materialstärke die ebenfalls dargestellt wird, mittels einer Taste 64 einstellbar ist.

Die Anordnung ist nicht nur bei Handbohrmaschinen zu verwenden sondern ebenfalls zur Steuerung anderer elektrischer Geräte, wie z. B. Waschmaschinen, Küchenmaschinen oder ähnliches, geeignet. Hierbei sind dann andere relevante Größen, z. B. die Waschtemperetur und die maximale Schleuderdrehzahl bei Waschmaschinen einzugeben.

**Patentansprüche**

1. Elektrisches Gerät, insbesondere Handwerkzeug wie Bohrmaschine, mit einer Drehzahlregel - und/oder Steuervorrichtung, mit einer Eingabevorrichtung (1, 4) für eine erste für die Bearbeitung relevante Größe und für eine weitere für die Bearbeitung relevante Größe und mit einer Einrichtung, die aufgrund der Werte der Eingabevorrichtung (1, 4) auf Schaltvorrichtungen, insbesondere auf die Drehzahlregel - und/oder Steuervorrichtung, Einfluß nimmt, dadurch gekennzeichnet, daß die Ausgangssignale der Eingabevorrichtung (1, 4) direkt als Adressen einem Speicher (15), insbesondere einem ROM oder PROM, zugeführt sind und daß ein Teil der Ausgangssignale des Speichers (15) auf Schaltelemente (41, 42) einwirkt, deren Betätigung die minimale oder ideale Drehzahl des Motors des Gerätes bestimmt und ein weiterer Teil der Ausgänge eine Vorrichtung (20) zur Anzeige von Informationen steuert.

2. Elektrisches Gerät nach Anspruch 1, dadurch gekennzeichnet, daß ein Teil der Ausgangssignale des Speichers (15) zur Begrenzung der Drehzahl des Motors (31) des Gerätes dient.

3. Elektrisches Gerät nach Anspruch 1, dadurch gekennzeichnet, daß ein Teil der Ausgangssignale des Speichers (15) zur Festlegung der Drehzahl des Motors (31) dient.

4. Elektrisches Gerät nach einem der vorhergehenden Ansprüche, dadurch gekennzeichnet, daß der weitere Teil der Ausgangssignale des Speichers (15) zur Anzeige der Solldrehzahl des Motors des Gerätes dient.

5. Elektrisches Gerät nach einem der vorhergehenden Ansprüche, dadurch gekennzeichnet, daß die Eingabevorrichtung für die Eingabe der Signale in den Speicher (15) zumindest teilweise kodierte Drucktasten aufweist.

6. Elektrisches Gerät nach einem der vorhergehenden Ansprüche, dadurch gekennzeichnet, daß die Eingabevorrichtung für die Eingabe der Signale in den Speicher (15) zumindest teilweise einen kodierten Drehknopf (32) aufweist.

7. Elektrisches Gerät nach einem der vorhergehenden Ansprüche, dadurch gekennzeichnet, daß die Eingabevorrichtung für die Eingabe der Signale in den Speicher (15) zumindest teilweise je eine Drucktaste aufweist, mit der jeweils eine relevante Größe zyklisch veränderbar ist.

8. Elektrisches Gerät nach einem der vorhergehenden Ansprüche, dadurch gekennzeichnet, daß die Eingabevorrichtung für die Eingabe der Signale in den Speicher (15) eine Vorrichtung zur automatischen Erfassung einer relevanten Größe aufweist.

**Claims**

1. Electric appliance, in particular a hand tool such as a drill, having a speed regulating and/or a control device, having an input device (1, 4) for a first variable relevant to machining and for a further variable relevant to machining and having a device which influences switching devices, in particular the speed regulating and/or control device, on the basis of the values of the input device (1,4), characterized in that the output signals of the input device (1,4) are fed directly as addresses to a memory (15), in particular a ROM or PROM, and in that some of the output signals of the memory (15) act on switching elements (41, 42), the actuation of which determines the maximum or ideal speed of the motor of the appliance and some other of the outputs control a device (20) for the display of information.

2. Electric appliance according to claim 1, characterized in that some of the output signals of the memory (15) serve to limit the speed of the motor (31) of the appliance.

3. Electric appliance according to claim 1, characterized in that some of the output signals of the memory (15) serve to fix the speed of the motor (31).

4. Electric appliance according to one of the preceeding claims, characterized in that the other output signals of the memory (15) serve to display the set speed of the motor of the appliance.

5. Electric appliance according to one of the preceeding claims, characterized in that the input device for the input of the signals into the memory (15) has at least partly encoded push buttons.

6. Electric appliance according to one of the preceeding claims, characterized in that the input device for the input of the signals into the memory (15) has at least partly an encoded rotary knob (32).

7. Electric appliance according to one of the preceeding claims, characterized in that the input device for the input of the signals into the memory (15) has at least partly one push button in each case by means of which a relevant variable can be cyclically varied.

8. Electric appliance according to one of the preceeding claims, characterized in that the input device for the input of the signals into the memory (15) has a device for the automatic acquisition of a relevant variable.

**Revendications**

1. Appareil électrique notamment appareil à main tel que perceuse comportant un dispositif de régulation de vitesse de rotation et/ou de commande avec un dispositif d'entrée (1, 4) pour une première grandeur caractéristique d'usinage ainsi que pour une autre grandeur caractéristique d'usinage et un dispositif d'entrée qui, en fonction des grandeurs du dispositif d'entrée (1, 4) agit sur les dispositifs de commutation en particulier sur le dispositif de régulation de vitesse de régulation et/ou le dispositif de commande, appareil caractérisé en ce que les signaux de sortie (V) du dispositif d'introduction (1, 4) sont appliqués directement comme des adresses à une mémoire (15) en particulier une mémoire ROM ou PROM et en ce qu'une partie des signaux de sortie de la mémoire (15) agit sur des éléments de commutation (41, 42) dont la mise en oeuvre définit la vitesse de rotation maximale ou idéale du moteur de l'appareil et une autre partie des sorties commande un dispositif (20) pour affichage d'informations.

2. Appareil électrique selon la revendication 1, caractérisé en ce qu'une partie des signaux de sortie de la mémoire (15) sert à limiter la vitesse de rotation du moteur (31) de l'appareil.

3. Appareil électrique selon la revendication 1, caractérisé en ce qu'une partie des signaux de sortie de la mémoire (15) sert à déterminer la vitesse de rotation du moteur (31).

4. Appareil électrique selon l'une quelconque des revendications précédentes, caractérisé en ce que l'autre partie des signaux de sortie de la mémoire (15) sert à l'affichage de la vitesse de rotation de consigne du moteur de l'appareil.

5. Appareil électrique selon l'une quelconque des revendications précédentes, caractérisé en ce que le dispositif d'entrée comporte des touches au moins partiellement codées pour introduire les signaux dans la mémoire (15).

6. Appareil électrique selon l'une des revendications précédentes, caractérisé en ce que le dispositif d'entrée comporte un bouton rotatif (32) au moins partiellement codé pour introduire les signaux dans la mémoire (15).

7. Appareil électrique selon l'une quelconque des revendications précédentes, caractérisé en ce que le dispositif d'entrée comporte pour l'introduction des signaux dans la mémoire (15), au moins chaque fois un bouton-poussoir qui permet de modifier de manière cyclique chaque fois une grandeur caractéristique.

8. Appareil électrique selon l'une quelconque des revendications précédentes, caractérisé en ce que le dispositif d'entrée comporte pour introduire les signaux dans la mémoire (15), un dispositif de saisie automatique d'une grandeur caractéristique.

FIG, 1

0 135 015

FIG. 2

GETRIEBE
STUFE II

0 135 015

# FIG.3

# FIG. 4

# FIG.5

# FIG. 6